# EUROPEAN PATENT SPECIFICATION

(11) **EP 2 327 643 B1**
(45) Date of publication and mention of the grant of the patent: **17.04.2013**
(21) Application number: 08809947.8
(22) Date of filing: 03.09.2008
(51) Int. Cl.: B65G 1/04

(54) **Storage system**
Lagersystem
Système de stockage

(43) Date of publication of application: 01.06.2011
(60) Divisional application: 12182225.8
(73) Proprietor: Dematic Accounting Services GmbH, 63073 Offenbach (DE)
(72) Inventor: YAMASHITA, Shin, 63073 Offenbach (DE)
(74) Representative: Götze, Stephen
(86) International application number: PCT/JP2008/065892
(87) International publication number: WO 2010/026633

(56) References cited:
- JP-A- 8 175 620
- JP-A- 8 175 621
- JP-A- 9 240 809
- JP-A- 10 297 712
- JP-A- 2004 123 240
- JP-U- 57 199 211
- US-A- 5 135 344

## Description

### Technical Field

The present invention relates to an automated storage/retrieval system that includes at least one pair of multi-tier racks arranged parallel to each other and a transferring shuttle that is disposed between these multi-tier racks at each tier between several tiers and travels horizontally to store a unit load to and retrieve a unit load from the multi-tier racks.

### Background Art

For such a type of automated storage/retrieval system, an automated storage/retrieval system described in, e.g., Japanese Patent Examined Application Publication No. 5-21802 is well-known. This automated storage/retrieval system includes at least one pair of left and right multi-tier racks composed of multi-tier shelves. Between the multi-tier racks, a transferring shuttle that can travel horizontally is disposed at each tier. The transferring shuttle can store a unit load to and retrieve a unit load from the left and right multi-tier racks.

In the automated storage/retrieval system described in Japanese Patent Examined Application Publication No. 5-21802, a storage station is disposed adjacent to one end of one of the pairs of multi-tier racks, and a retrieval station is disposed adjacent to the same end of the other multi-tier rack. These stations have multi-tier waiting conveyors at the same height levels as the shelves of the multi-tier racks. On each of the waiting conveyors, only one unit load can be placed. The waiting conveyors in the storage station move a unit load toward the multi-tier rack, and the waiting conveyors in the retrieval station move a unit load apart from the multi-tier rack. Each transferring shuttle can move as far as these stations and can deliver a unit load to and receive a unit load from the waiting conveyor positioned at the same height level of each transferring shuttle.

An elevating device is disposed adjacent to the opposite side of the storage station and retrieval station from the multi-tier rack. The elevating device is composed of a central mast, and an elevating platform which can move up and down disposed at an elevation on both left and right sides of this mast. Each elevating platform has a conveyor function. The elevating platform positioned at the storage station side can be interfaced to a storage conveyor of an external conveyor system, receive an unit load transferred from the storage conveyor, move up or down and transfer the unit load to a desired waiting conveyor in the storage station for further handling. The unit load is finally stored in a desired position of the multi-tier rack by transferring shuttle. Meanwhile, the elevating platform positioned at the retrieval station side can be interfaced to a retrieval conveyor in the external conveyor system, and a unit load, which has been transferred from the multi-tier rack through the transferring shuttle to the waiting conveyor in the retrieval station, can be taken to the retrieval conveyor.

In the automated storage/retrieval system of prior arts as described above, the route from the storage conveyor in the external conveyor system to the storage station is one-way, as well as the route from the retrieval station to the retrieval conveyor in the external conveyor system is also one-way. This created the problem of the storage and retrieval operation becoming a single cycle. That is, with respect to storage, after a unit load has been transferred from the storage conveyor through the elevating platform to the waiting conveyor of the storage station, the elevating platform without a unit load needs to be moved back to the storage conveyor in order to store the next unit load. The same applies to retrieval. That is, after a unit load has been retrieved, the elevating platform without a unit load must be moved back to the next unit load standing by on the waiting conveyor in the retrieval station. It is desirable to avoid such movement of the elevating platform while being empty.

If the balance between the storage quantity and the retrieval quantity is disrupted due to some external reason, either one of the storage equipment or retrieval equipment can reach full operating capacity or suffer insufficient capacity (overflow) whereas the other equipment may be under-utilized, which impedes capacity improvement, combined with the single cycle problem.

Furthermore, in the configuration of prior art, if either one of the storage equipment or retrieval equipment is out of order, the fallback to deal with such a breakdown is difficult and expensive. For example, if an elevating platform for retrieval is out of order, retrieval cannot be performed since the other elevating platform is exclusively for storage. Even if a conveyor on the elevating platform and a storage waiting conveyor are made to be operated in forward and reverse directions in order to overcome the problem, an additional retrieval conveyor of the external conveyor system will be required only to address this out-of-order situation.

JP2004-123240 A discloses an automated storage according to the preamble of claim 1, and retrieval system comprising first and second multi-tier racks and first and second storage and retrieval stations with waiting conveyors. Also transferring shuttles and an elevating device with elevating platforms and a conveyor system for delivering and receiving unit loads for the elevating platforms is disclosed.

An objective of the present invention is to provide an automated storage/retrieval system and a storage/retrieval method that can solve the aforementioned conventional problems.

### Summary of the Invention

According to the present invention, the above objective is achieved by an automated storage/retrieval system according to claim 1.

The conveying direction of the waiting conveyors in the first storage/retrieval station can be opposite alternate for tiers or opposite for several tiers.

Said conveyor system may comprise: a first storage conveyor to transfer a unit load to the first elevating platform; a first retrieval conveyor which is disposed above or below the first storage conveyor and onto which a unit load is transferred from the first elevating platform; a second storage conveyor to transfer a unit load to the second elevating platform; and a second retrieval conveyor which is disposed above or below the second storage conveyor and onto which a unit load is transferred from the second elevating platform.

The first elevating platform and second elevating platform mentioned above can be of double decker type with upper and lower platforms.

The first and second elevating platforms mentioned above can be constructed so that each of them can carry two or more unit loads at once.

Furthermore, it is favorable to switch the conveying direction of the waiting conveyors between forward and reverse directions.

Alternatively, said conveyor system may include: a first storage conveyor to transfer a unit load to said first elevating platform; a first retrieval conveyor which is disposed at the same height level of the first storage conveyor and onto which a unit load is transferred from the first elevating platform; a second storage conveyor to transfer a unit load to the second elevating platform; and a second retrieval conveyor which is disposed at the same height level of the second storage conveyor and onto which a unit load is transferred from the second elevating platform.

According to the invention an additional multi-tier rack and an additional storage/retrieval station is disposed respectively on the opposite side of the elevating device from the first multi-tier rack and first storage/retrieval station and the second multi-tier rack and second storage/retrieval station.

### Brief Description of the Drawings

Fig. 1 is a perspective view illustrating an automated storage/retrieval system
Fig.2 is a schematic view illustrating the automated storage/retrieval system, (a) shows the construction of the left hand side while (b) shows that of the right hand side.
Fig. 3 is a schematic horizontal cross sectional view illustrating the automated storage/retrieval system shown in Fig. 1.
Fig. 4 is a schematic view illustrating a variation of the first embodiment of the present invention, (a) shows the configuration where the storage conveyor and retrieval conveyor of the external transfer system are disposed in the upper portion and (b) shows the configuration where the storage conveyor and retrieval conveyor of the external conveyor system are disposed in an intermediate portion.
Fig. 5 is a schematic view illustrating a case where the elevating platform is of a double-deck type.
Fig. 6 is a schematic view illustrating a system where an additional multi-tier rack and an additional storage/retrieval station are disposed, in accordance with the invention.
Fig. 7 is a schematic view illustrating the state where the conveying direction of waiting conveyors in the storage/retrieval station is alternated every plurality of tires.
Fig. 8 is a perspective view illustrating an automated storage/retrieval system
Fig. 9 is a schematic view illustrating storage/retrieval system in Fig. 8 (a) shows the construction of the left hand side while (b) shows that of the right hand side.
Fig. 10 is a schematic view illustrating a variation of the second embodiment of the present invention,(a) shows the configuration where the storage conveyor and retrieval conveyor of the external transfer system are disposed in the upper portion and (b) shows the configuration where the storage conveyor and retrieval conveyor of the external conveyor system are disposed in an intermediate portion.
Fig. 11 is a schematic view illustrating a system where an additional multi-tier rack and an additional storage/retrieval station are disposed in a configuration illustrated in Fig. 9, in accordance with the invention.

### Description of Preferred Embodiments

Preferred embodiments of the present invention will be described in detail with reference to the drawings. In the drawings, the same reference characters indicate the same or corresponding portions.

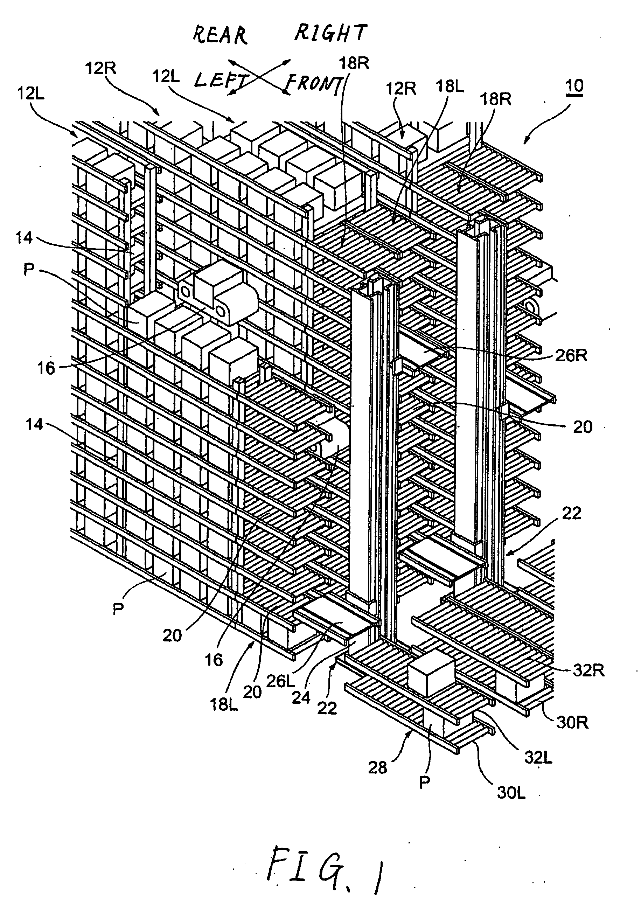

Fig.1 is a perspective view illustrating an automated storage/retrieval system 10 for describing the workings of such a system. As illustrated, the automated storage/retrieval system 10 includes at least one pair of left and right multi-tier racks 12L, 12R. Each of the multi-tier racks 12L, 12R includes multiple tier of shelves 14 (specifically around 5 to 20 shelves) oriented in one horizontal direction (a back and forth direction in Fig. 1). The pair of the two multi-tier racks 12L, 12R are arranged parallel and opposite each other with a predetermined distance between them. The multi-tier rack 12L on the left corresponds to the first multi-tier rack stated in the claims and the multi-tier rack 12R on the right corresponds to the second multi-tier rack stated in the claims.

Between these multi-tier racks 12L, 12R, a transferring shuttle 16 that can travel in a horizontal direction to where the shelf 14 extends is implemented at each tier. The transferring shuttle 16, which is not illustrated in detail, includes: a travelling platform that can accommodate a unit load P placed in its mid portion; a pair of arms that are disposed front and rear of this travelling platform and can extend both right and left in a horizontal direction perpendicular to the travelling direction of the platform (shown as left and right direction in Fig. 1); and fingers placed at each end of the arms, which can open and close. When the arm are extended towards either right or left while the fingers are closed, a unit load P placed in the mid portion of the travelling platform can be pushed out, thereby enabling the unit load P to be housed on the shelf 14 at the same height level of that of the center portion surface of the travelling platform in the transferring shuttle 16. Conversely, when the arm is extended into the shelves 14 while the fingers are open; then the fingers are put into closed position to hook the unit load P; and the arm is retracted, thereby enabling the unit load P to be retrieved onto the travelling platform.

Adjacent to one end of the left and right multi-tier racks 12L, 12R, storage/retrieval stations 18L, 18R are disposed, respectively. The storage/retrieval station 18L on the left corresponds to the first storage/retrieval station stated in the claims and the storage/retrieval station 18R on the right corresponds to the second storage/retrieval station stated in the claims. These storage/retrieval stations 18L, 18R are equipped with the same number of waiting conveyors 20 as that of shelves 14 of the multi-tier racks 12L, 12R, and each of the waiting conveyors 20 is disposed in such a way that the carrying surface of the waiting conveyor is level with its corresponding shelf 14 of the multi-tier racks 12L, 12R. The waiting conveyors 20 are oriented in such a way that their conveying direction is along a back and forth direction illustrated in Fig. 1. Though various types of the waiting conveyor 20 can be conceived, a roller conveyor is desirable so that the unit load P can be delivered or received along a direction perpendicular to the conveying direction.

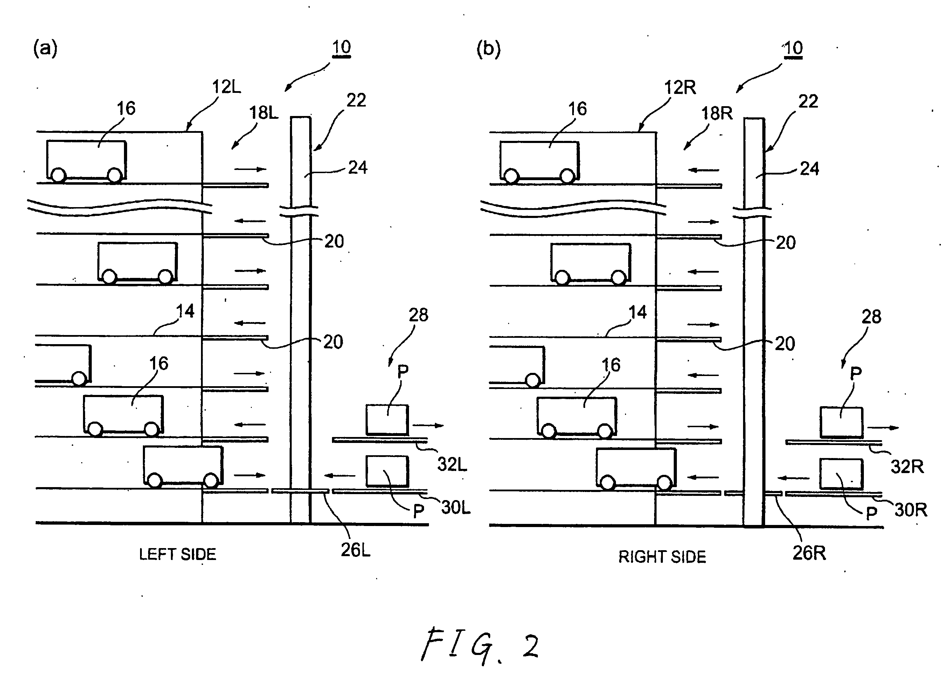

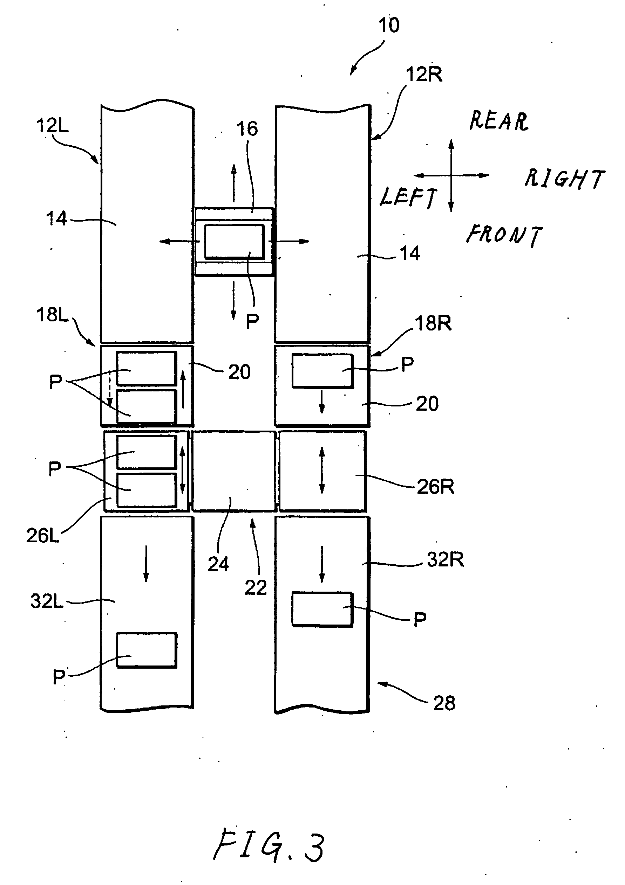

It should be noted that, in the present invention, the conveying direction of the waiting conveyors 20 in each of the storage/retrieval stations 18L, 18R is set to be alternately opposite every tier. At the same height level, the conveying direction of the waiting conveyor 20 of the storage/retrieval station 18L on the left is opposite to that of the waiting conveyor 20 of the storage/retrieval station 18R on the right. Figs. 2 and 3 schematically illustrate these arrangements; Fig. 2(a) illustrates the storage/retrieval station 18L on the left etc. and Fig. 2B illustrates the storage/retrieval station 18R on the right etc..

It is preferable that the conveying direction of each of the waiting conveyors 20 can be switched between forward and reverse directions so as to deal with various modes of storage and retrieval, which will be described later.

It is preferable that two or more unit loads P can be placed on each of the waiting conveyors 20. According to the first embodiment, two unit loads P can be placed side by side along any conveying direction.

There is a gap between the left and right storage/retrieval stations 18L, 18R, and the transferring shuttle 16 at each tier can move into the space between the storage/retrieval stations 18L, 18R, thereby enabling the unit load P to be delivered to and received from the waiting conveyor 20 positioned at the same height level as that of the transferring shuttle 16.

Elevating devices 22 are disposed adjacent to the respective storage/retrieval stations 18L, 18R that are at the opposite side from the multi-tier racks 12L, 12R. Each of the elevating devices 22 is composed of a mast 24 disposed adjacent to the gap between the left and right storage stations 18L, 18R, and elevating platforms 26L, 26R disposed at an elevation respectively on the left and right sides of the mast 24. The elevating platform 26L on the left corresponds to the first elevating platform stated in the claims, and the elevating platform 26R on the right corresponds to the second elevating platform stated in the claims.

On the elevating platforms 26L, 26R, conveyors similar to the waiting conveyors 20 are mounted, and the conveying direction of these conveyance can be switched between the direction toward the storage/retrieval stations 18L, 18R and the opposite direction thereof. Conveying surfaces of the elevating platform 26L, 26R can be aligned with the carrying surface of any waiting conveyor 20 of the waiting conveyors 20 from the bottom tier to the top tier of the storage/retrieval stations 18L, 18R by raising or lowering the elevating platform 26L, 26R, thereby allowing for delivery and receipt of the unit load P between the elevating platforms 26L, 26R and the waiting conveyors 20 of the storage/retrieval stations 18L, 18R.

It is preferable that two or more unit loads P can be placed on the carrying surface of each of the elevating platforms 26L, 26R. According to the first embodiment, two unit loads P can be simultaneously placed side by side along the conveying direction.

Furthermore, an external conveyor system 28 is interfaced to each of the elevating devices 22. The external carrying system 28 is equipped with two-tier upper and lower transfer conveyors 30L, 30R, 32L, 32R at both left and right sides of the external conveyor system 28 so that the unit load P can be transferred to and from each of the elevating platform 26L, 26R of the elevating devices 22. According to the example in Figs. 1 and 2 illustrating the first embodiment, lower transfer conveyors 30L, 30R of each side are storage conveyors, and upper transfer conveyors 32L, 32R are retrieval conveyors. By raising or lowering the elevating platform 26L, 26R at the same side, conveying surfaces of the elevating platform 26L, 26R can be aligned with exit ends of the storage conveyors 30L, 30R or entrance ends of the retrieval conveyors 32L, 32R. Conversely, the lower carrying conveyors 30L, 30R can be retrieval conveyors, and the upper carrying conveyors 32L, 32R can be storage conveyors. Alternatively, the carrying conveyor 30L can be a retrieval conveyor; the carrying conveyor 30R can be a storage conveyor; the carrying conveyor 32L can be a storage conveyor; and the carrying conveyor 32R can be a retrieval conveyor. Conversely, the carrying conveyor 30L can be a storage conveyor; the carrying conveyor 30R can be a retrieval conveyor; the carrying conveyor 32L can be a retrieval conveyor; and the carrying conveyor 32R can be a storage conveyor. The storage conveyor 30L and retrieval conveyor 32L on the left correspond to the first storage conveyor and the first retrieval conveyor stated in the claims, respectively; and the storage conveyor 30R retrieval conveyor 32L on the right correspond to the second storage conveyor and the second retrieval conveyor stated in the claims, respectively.

In the automated storage/retrieval system 10 described above, its entire operation is controlled by a control system that is not illustrated.

Operation of the above automated storage/retrieval system 10 will be described below.

First, multiple unit loads P are already stored in the multi-tier racks 12L, 12R. Information pertaining to these unit loads P (identification numbers and storage positions of the unit loads P and so on) is stored in the memory of the controller (not illustrated) to control the entire operation of the automated storage/retrieval system 10.

In this state, once a retrieval order is issued to the controller, the controller properly decides the unit load P to be retrieved according to the retrieval order and stores it as retrieval data. Meanwhile, when the unit load P to be stored is transferred along the external conveying path to the automated storage/retrieval system 10, information of the unit load P is scanned by a bar code reader or an RFID reader, and the controller stores the scanned information as storage information data.

In the configuration of Fig. 2, if the unit load P to be first retrieved is placed on the fourth-tier shelf 14 in the multi-tier rack 12R on the right, the controller makes the transferring shuttle 16 at the fourth tier operate, move to the front of the first unit load P to be retrieved, and pick the first unit load P. Then, the transferring shuttle 16 on which the first unit load P is placed moves into the space between the left and right storage/retrieval stations 18L, 18R, where the unit load P is transferred onto the fourth-tier waiting conveyor 20 of the storage station 18R on the right.

If the elevating platform 26R is aligned with the fourth-tier waiting conveyor 20, the unit load P placed on this waiting conveyor 20 is transferred onto the elevating platform 26R. Then, when the elevating platform 26R is lowered to be aligned with the retrieval conveyor 32R on the right in the external carrying system 28, the unit load P on the elevating platform 26R is pushed out to the retrieval conveyor 32R on the right. Thus, the unit load P has been retrieved.

Next, the controller recognizes the unit load P to be first stored on the basis of storage data and guides the unit load P to the storage conveyor 30R on the right in the external conveyor system 28. After that, the aforementioned elevating platform 26R is lowered to be aligned with the storage conveyor 30R. Then, the first unit load P to be stored is transferred from the storage conveyor 30R to the elevating platform 26R, which is raised to be aligned with the waiting conveyor 20 of the storage/retrieval station 18R at the tier where this unit load P will be stored. The unit load P is transferred from the elevating platform 26R to this waiting conveyor 20 and stands by in this state. After that, the fourth-tier transferring shuttle 16 is driven on a timely basis, thereby housing the unit load P to a desired storage area.

After retrieval and storage of the first unit load is completed, retrieval and storage of the unit load is alternately performed in the same manner as above, in such an order: a second unit load to be retrieved, a second unit load to be stored, a third unit load to be retrieved, and a third unit load to be stored and so on. Accordingly, raising and lowering of the elevating platforms 26L, 26R without a unit load can be minimized and the automated storage/retrieval system 10 is wholly operated in a combined cycle, thereby significantly improving the efficiency of storage/retrieval operation. If a multiple of unit loads can be placed on each of the conveyors of the elevating platforms 26L, 26R, the operation is performed in the same cycle as above and the number of unit loads handled in one cycle is more than one. For example, if two unit loads can be placed on each of the conveyors of the elevating platforms 26L, 26R, in the combined cycle, the cycle can be repeated in which the first unit load to be retrieved is taken from the waiting conveyor 20 (the fourth tier), the second unit load to be retrieved is taken from the waiting conveyor 20 (the second tier), the first and second unit loads are retrieved to the retrieval conveyor 32R and moved to the storage conveyor 30R, and the first and second unit loads to be stored are taken and stored to the waiting conveyor 20.

The above example is a case in which the storage quantity and the retrieval quantity are well balanced. Even if the balance is disrupted, that is, even if the storage quantity is more than the retrieval quantity or vice versa, the work load of the elevating platform 26L and the work load of the elevating platform 26R are balanced since retrieval and storage is alternate at every tier and the elevating platforms 26L, 26R are used for both storage and retrieval. As a result, the operation efficiency of the equipment such as the elevating platforms 26L, 26R is increased, thereby realizing a high performance.

According to the first embodiment, since two unit loads P can be simultaneously placed on each of the waiting conveyors 20 in the storage/retrieval stations 18L, 18R, a maximum of four unit loads P can be made to stand by if the balance of the storage quantity and retrieval quantity is disrupted (see Fig. 3).

In the first embodiment, the conveying direction of the elevating platforms 26L, 26R can be switched between forward and reverse directions, as well as the conveying direction of the waiting conveyors 20 of the storage/retrieval stations 18L, 18R can be switched between forward and reverse directions. For example, if there is no unit load to be stored, the waiting conveyor 20 that is normally used for storage can be used for retrieval, as indicated by a dotted line arrow in Fig. 3. Since both of the elevating platforms 26L, 26R can be used for retrieval, the retrieval capability is increased. Furthermore, since two unit loads P can be placed on each of the elevating platforms 26L, 26R, a maximum of four unit loads P can be simultaneously retrieved.

Furthermore, in the configuration according to the first embodiment, for example, even if either of the elevating platforms 26L, 26R on the left and the right or either of the storage/retrieval stations 18L, 18R on the left and the right is out of order, storage and retrieval can be performed by only one side of the right and left sides since the conveying direction of the waiting conveyors 20 can be switched. Especially in an automated storage/retrieval system, a state where retrieval cannot be performed is more critical than a state where storage cannot be performed, and therefore if all of the waiting conveyors 20 in a usable storage/retrieval station are used for retrieval, retrieval can be smoothly performed. Depending on the change in the retrieval quantity and storage quantity, the conveying direction of the waiting conveyor 20 whose conveying direction has been switched for retrieval can be switched back to the original direction, thereby properly performing storage.

Furthermore, according to the configuration of the first embodiment, the unit load P stored in the multi-tier racks 12L, 12R can be easily rearranged. For example, if the unit load P needs to be rearranged during late at night for work the next day, the unit load P can be moved to a desired position of the multi-tier rack12L, 12R by only operating the elevating device 22, the storage/retrieval stations 18L, 18R and transferring shuttle 16 without taking the unit load P to the external carrying system 28. For example, if the unit load P on the second-tier shelf 14 of the multi-tier racks 12L, 12R is moved to the fifth-tier shelf 14, the unit load P is transferred from the second-tier waiting conveyor 20 in the storage/retrieval station 18L on the left to the elevating platform 26L on the left; the elevating platform 26L is raised to the fifth-tier; the unit load P is transferred to the fifth-tier waiting conveyor 20 in the storage/retrieval station 18L on the left and stored to the shelf 14 by the transferring shuttle 16. Alternatively, if the unit load P on the second-tier shelf 14 in the multi-tier racks 12L, 12R is moved to the fourth-tier shelf 14, the unit load P is transferred from the second-tier waiting conveyor 20 in the storage/retrieval station 18L on the left to the elevating platform 26L on the left; the elevating platform 26L is raised to the third-tier; the unit load P is transferred to the third-tier waiting conveyor 20 in the storage/retrieval station 18L on the left; the unit load P is moved to the third-tier waiting conveyor 20 in the storage/retrieval station 18R on the right by the transferring shuttle 16 and raised to the fourth tier by the elevating platform 26R on the right; and the unit load P is placed at a desired position in the fourth-tier shelf 14 by the fourth-tier waiting conveyor 20 in the storage/retrieval station 18R on the right and the transferring shuttle 16. By switching the conveying direction of the waiting conveyor 20, the unit load P can be carried directly from the third tier to the fourth tier. In a conventional configuration described above, since the route from storage to retrieval is one-way, the unit load cannot be rearranged without being taken to an external carrying system. However, the configuration according to the first embodiment does not have such a problem.

In a practical operation of the storage/retrieval system, a case may occur in which the unit load P that has been ordered to be stored needs to be retrieved before storage. Even in such a case, the unit load P can be sent directly from the storage conveyors 30L, 30R through the elevating platforms 26L, 26R to the retrieval conveyors 32L, 32R, thereby promptly meeting the request.

Examples of the storage/retrieval method in the automated storage/retrieval system 10 according to the first embodiment of the present invention have been described. However, it should be appreciated that the method to move a unit load P is not limited to the above examples.

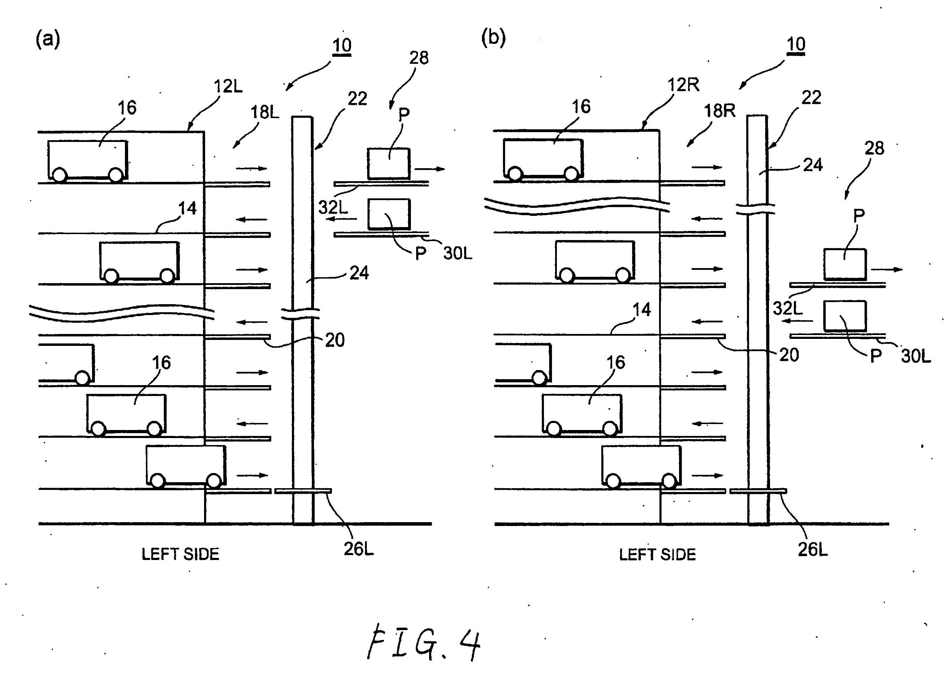

In the above embodiment, although it is illustrated that the storage conveyors 30R, 30L and retrieval conveyors 32L, 32R of the external conveyor system 28 are placed near the floor surface of the automated storage/retrieval system 10, they may be placed in the upper portion as illustrated in Fig. 4A, or in the intermediate portion as illustrated in Fig. 4B.

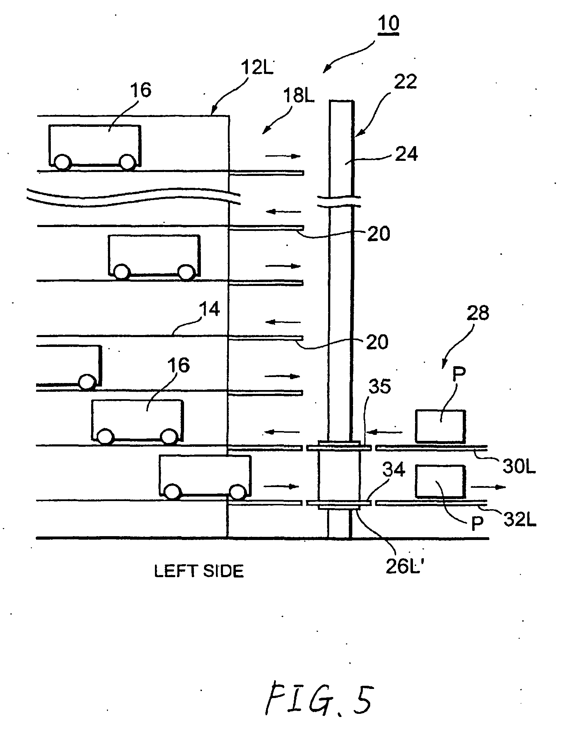

Furthermore, as an elevating platform 26L' illustrated in Fig. 5, the elevating platform may be of a double-deck type, that is, may have two upper and lower conveyors 34, 35. In this case, by making the vertical distance between the storage conveyors 30L, 30R and retrieval conveyors 32L, 32R, the vertical distance between the conveyors 34 and 35 of the elevating platform 26L', and the vertical distance between the waiting conveyors 18L and 18R identical, storage and retrieval can be simultaneously performed, thereby further improving the operation efficiency. For this purpose, in the configuration illustrated in Fig. 5, vertical positions of the storage conveyor 30L and retrieval conveyor 32L are opposite to those illustrated in Fig. 2. That is, vertical positions of the storage conveyor and the retrieval conveyor can be properly changed.

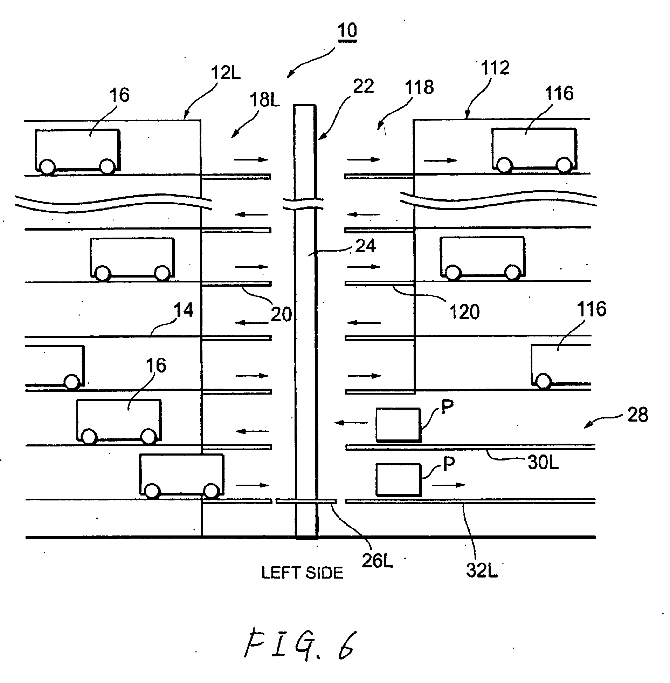

According to the invention, as illustrated in Fig. 6, in addition to the multi-tier racks 12L, 12R in the above first embodiment, one pair of left and right multi-tier racks 112 similar to the multi-tier racks 12L, 12R is additionally placed on the opposite side of the elevating device 22 from the multi-tier racks 12L, 12R.

Between these additional pair of multi-tier racks 112, similarly to the first embodiment, a transferring shuttle 116 is placed at each tier. In these additional multi-tier racks 112, since the storage conveyors 30L, 30R and retrieval conveyors 32L, 32R are placed in the lower portion, the number of tiers are less than the number of tiers of the multi-tier racks 12L, 12R at the opposite side.

Adjacent to each of the additional multi-tier racks 112, a storage/retrieval station 118 similar to the storage/retrieval stations 18L, 18R in the first embodiment is placed, facing the elevating device 22. In storage/retrieval stations 18L, 18R and the storage/retrieval station 118 that are facing each other with the elevating device 22 between them, it is preferable that the waiting conveyor 20 of storage/retrieval stations 18L, 18R and the waiting conveyor 120 of the storage/retrieval station 118 at the same height level have the same conveying direction.

In the configuration illustrated in Fig.6, the storage quantity and capacity for the unit load P can be increased, and also rearrangement of the unit load P at the same height level can be more easily performed. Furthermore, as long as the storage/retrieval system has the same floor space as that in the first embodiment, the travelling area of each of the transferring shuttles 16, 116 in this configuration of FIG.6 is smaller than that of the first embodiment. Therefore, movement of the transferring shuttles 16, 116 can be reduced, thereby increasing the handling speed of the transferring shuttles 16, 116.

Furthermore, for example, at the same time as the unit load on the elevating platforms 26L, 26R is transferred to the storage/retrieval stations 18L, 18R, the unit load in the storage/retrieval station 118 on the side of the additional multi-tier rack 112 can be transferred to the elevating platforms 26L, 26R, and vice versa. That is, storage and retrieval can be performed in one stroke, thereby also improving the capacity in this respect.

As a variation of the configuration in Fig. 6, the storage conveyors 30L, 30R and retrieval conveyors 32L, 32R may be placed in the upper portion or intermediate portion. Furthermore, in the configuration in Fig. 6, the double-deck type elevating platform as illustrated in Fig. 5 can be used.

Still furthermore, according to the above embodiment, the storage conveyors 30L, 30R and retrieval conveyors 32L, 32R extend from both left and right sides, but one carrying conveyor whose conveying direction can be switched between forward and reverse directions can handle storage and retrieval, depending on storage and retrieval quantities and so on.

The above embodiment has a configuration in which one transferring shuttle 16 is disposed at each tier of the multi-tier racks 12L, 12R. If the transferring shuttle is of the type that can also move in the vertical direction, one transferring shuttle can be implemented for multiple levels.

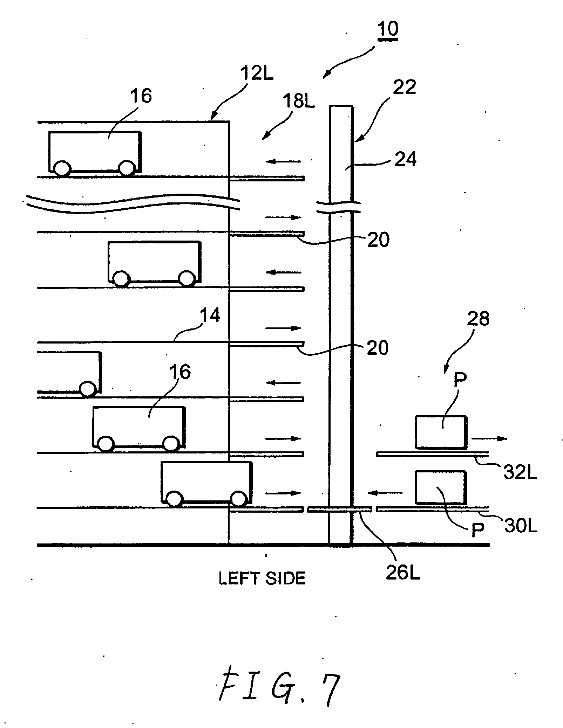

The conveying direction of the waiting conveyors 20 in each of the storage/retrieval stations 18L, 18R does not need to be alternately opposite every tier. The conveying direction of part of the waiting conveyors 20 in the storage/retrieval station 18L on the left is opposite the conveying direction of remaining waiting conveyors 20, and the conveying direction may be opposite every set of several tiers such as every two tiers or every three tiers (see Fig. 7).

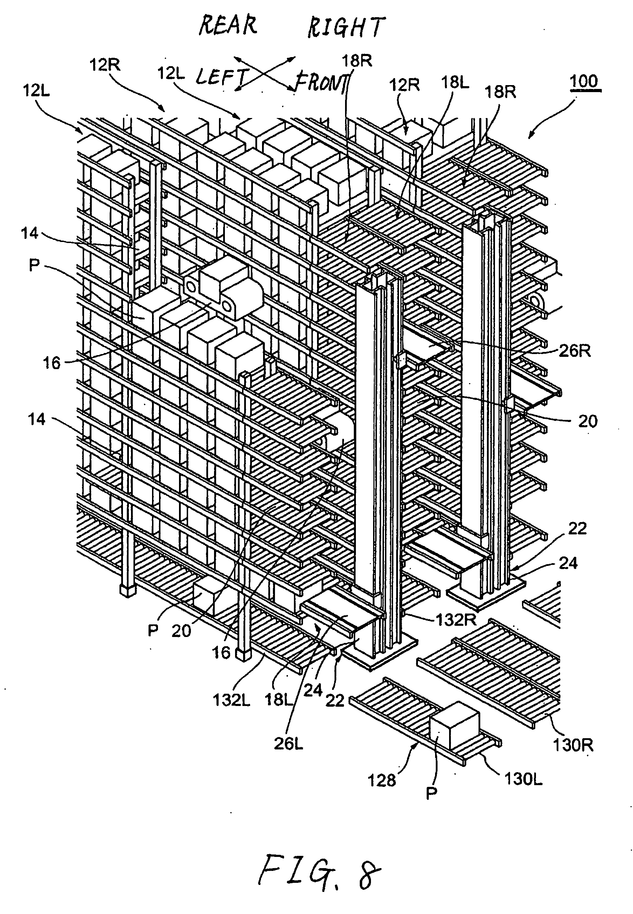

Fig. 8 is a perspective view illustrating an automated storage/retrieval system 100 further describing the workings of such a system. This automated storage/retrieval system 100 is basically the same as the automated storage/retrieval system 10 according to the first embodiment, and the same reference characters are used for identical or corresponding portions and the redundant description will be omitted.

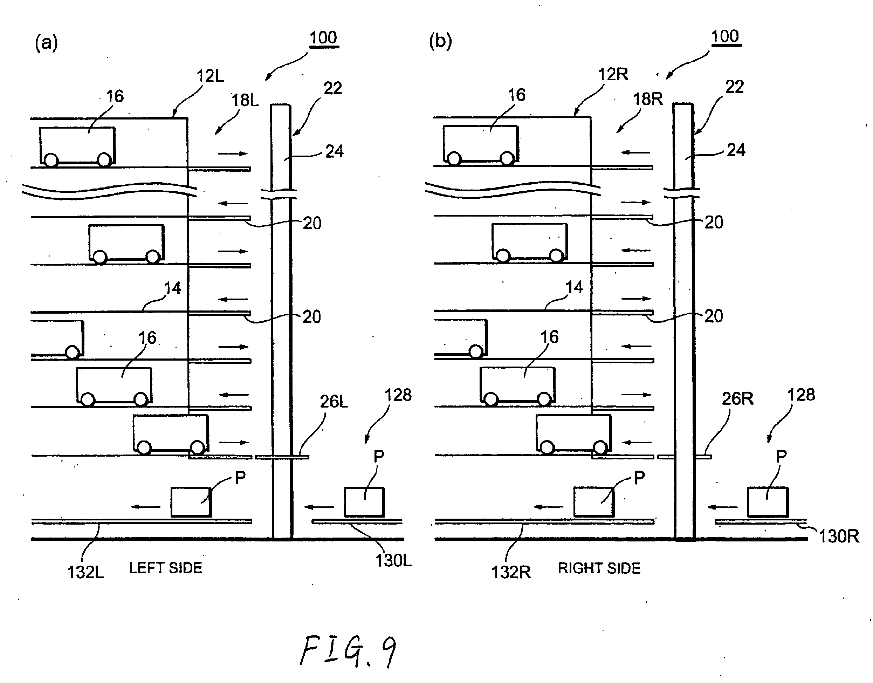

The automated storage/retrieval system 100 according to the second embodiment is different from the automated storage/retrieval system 10 according to the first embodiment in that at each of the left and right sides of the external carrying system 128, storage conveyors 130L, 130R and retrieval conveyors 132L, 132R are aligned to each other with the elevating device 22 between them, as can be seen from Fig. 9 that is a schematic view of Fig. 8. In the configuration illustrated in Figs. 8 and 9, the retrieval conveyors 132L, 132R are disposed below the multi-tier racks 12L, 12R. Accordingly, when the elevating platforms 26L, 26R at the respective sides are lowered to the bottom position, the carrying surface of the storage conveyors 130L, 130R, the carrying surface of the elevating platforms 26L, 26R, and the carrying surface of the retrieval conveyors 132L, 132R are aligned at the same plane.

In such a construction, the operation method in storage, retrieval and rearrangement of the unit load P is virtually the same as that in the first embodiment. However, for example, in the state where the elevating platforms 26L, 26R on which the unit load P to be retrieved is placed are aligned with the storage conveyors 130L, 130R and retrieval conveyors 132L, 132R, at the same time as the unit load P on the elevating platforms 26L, 26R are sent to the retrieval conveyors 132L, 132R, the unit load P to be stored that has been carried on the storage conveyors 130L, 130R can be placed on the elevating platforms 26L, 26R. In the first embodiment, after the unit load P is retrieved, the elevating platforms 26L, 26R without a unit load need to move to the storage conveyors 30L, 30R whereas in the second embodiment, there is an advantage in that such a wasted motion can be reduced.

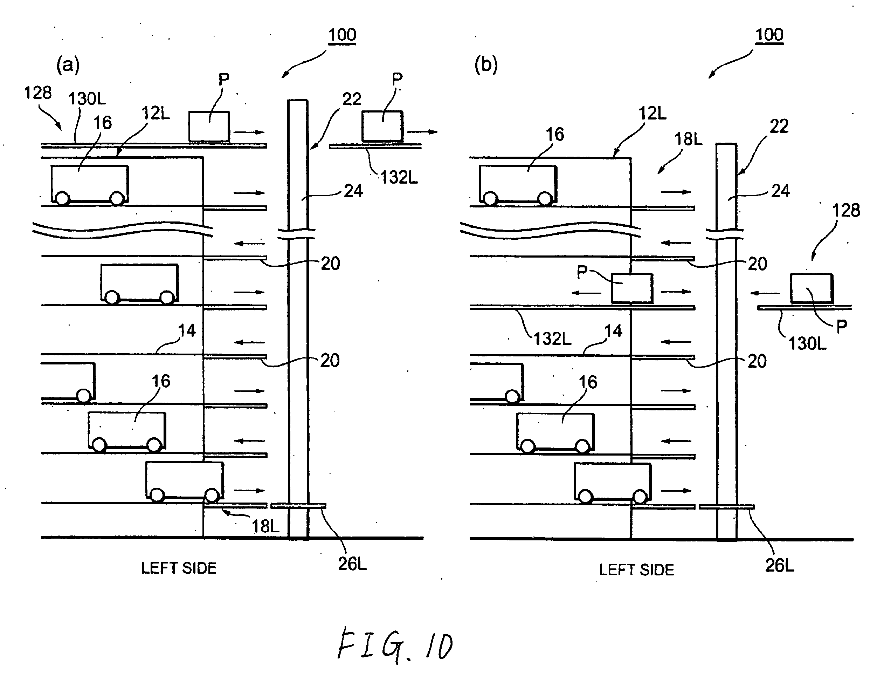

Fig. 10(a) illustrates a variation of the second embodiment in which the storage conveyors 130L, 130R and retrieval conveyors 132L, 132R are disposed in the upper portion of the multi-tier racks 12L, 12R. As illustrated in Fig. 10B, the storage conveyors 130L, 130R and retrieval conveyors 132L, 132R can be disposed in the intermediate portion.

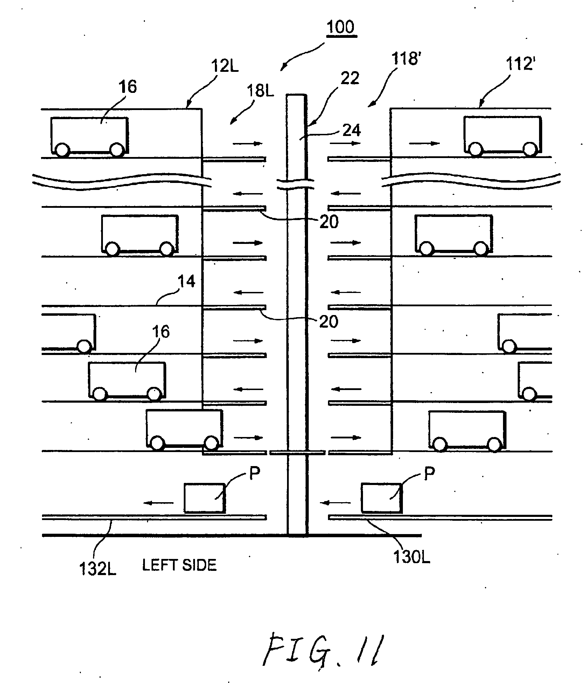

Furthermore, the variation of the above first embodiment is applied to the second embodiment of the present invention. As illustrated in Fig. 11, one pair of additional multi-tier racks 112' and one pair of additional storage/retrieval stations 118' is disposed facing the multi-tier racks 12L, 12R and storage/retrieval stations 18L, 18R.. If the transferring shuttle is of the type that can also move in the vertical direction, one transferring shuttle may be disposed at every set of several tiers of the multi-tier racks. Furthermore, the conveying direction of the waiting conveyors in the storage/retrieval stations does not need to be alternately opposite every tier, but may be opposite every set of several tiers such as every two tiers or every three tiers as illustrated in Fig. 7.

Still furthermore, according to the first and second embodiments of the present invention, it has been described that the storage/retrieval stations 18L, 18R, elevating device 22, and external carrying system 28 are disposed at the side of only one end of the multi-tier racks 12L, 12R, but the storage/retrieval stations, elevating device, and external carrying system may be disposed at the side of the other end of the multi-tier racks 12L, 12R in the same way.

The advantageous embodiments of the present invention have been described in detail, but it should be appreciated that the present invention is not limited to the above embodiments and various variations and alternations can be made without departing from the scope of the present invention as defined in the appended claims.

## Claims

1. An automated storage/retrieval system (10, 100) comprising:
a first multi-tier rack (12L) and a second multi-tier rack (12R) having a multiple of shelves (14) and arranged in a parallel pattern opposite each other;
a first storage/retrieval station (18L) and a second storage/retrieval station (18R) disposed adjacent to one end of each of the first multi-tier rack (12L) and the second multi-tier rack (12R), respectively, and having the same number of waiting conveyors (20) as the number of the shelves (14);
a transferring shuttle (16) disposed so as to horizontally travel at each tier or at every set of several tiers of the shelves (14) and waiting conveyors (20) between the first multi-tier rack (12L) and the second multi-tier rack, as well as between the first storage/retrieval station (18L) and the second storage/retrieval station (18R), the a transferring shuttle (16) delivering a unit load to and receiving a unit load from the shelves (14) and the waiting conveyors (20);
an elevating device (22) disposed at the opposite side from the first multi-tier rack (12L) and the second multi-tier rack (12R) and adjacent to the first storage/retrieval station (18L) and the second storage/retrieval station (18R), the elevating device (22) having a first elevating platform (26L) and a second elevating platform (26R) delivering a unit load to and receiving a unit load from the waiting conveyors (20) in each of the first storage/retrieval station (18L) and the second storage/retrieval station (18R); and
a conveyor system (28, 128) delivering a unit load to and receiving a unit load from the first elevating platform (26L) and the second elevating platform (26R);
wherein the conveying direction of the waiting conveyors (20) in the first storage/retrieval station (18L) and the conveying direction of the waiting conveyors (20) in the second storage/retrieval station (18R) at the same height levels are opposite each other; and
wherein the conveying direction of part of the waiting conveyors (20) in the first storage/retrieval station (18L) is opposite to the conveying direction of remaining waiting conveyors (20) in the first storage/retrieval station (18L) **characterized in that** an additional multi-tier rack (112) and an additional storage/retrieval station (118) are disposed at the opposite side of the elevating device (22) from the first multi-tier rack (12L) and the first storage/retrieval station (18L) and at the opposite side of the elevating device (22) of the second multi-tier rack (12R) and the second storage/retrieval station (18R), respectively.

2. The automated storage/retrieval system according to claim 1, wherein the conveying direction of the waiting conveyors (20) in the first storage/retrieval station (18L) are alternately opposite every tier.

3. The automated storage/retrieval system according to claim 1, wherein the conveying directions of the waiting conveyors (20) in the first storage/retrieval station (18L) are alternately opposite every set of several tiers.

4. The automated storage/retrieval system according to any one of claims 1 to 3, wherein the conveyor system (28) comprises:
a first storage conveyor (30L) transferring a unit load to the first elevating platform (26L);
a first retrieval conveyor (32L) disposed above or below the first storage conveyor (30L), onto the first retrieval conveyor (32L) a unit load is transferred from the first elevating platform (26L);
a second storage conveyor (30R) transferring a unit load to the second elevating platform (26R); and
a second retrieval conveyor (32R) disposed above or below the second storage conveyor (30R), onto the second retrieval conveyor (32R) a unit load is transferred from the second elevating platform (26R).

5. The automated storage/retrieval system according to any one of claims 1 to 4, wherein the first elevating platform (26L) and the second elevating platform (26R) have two upper and lower tiers.

6. The automated storage/retrieval system according to any one of claims 1 to 5, wherein two or more unit loads can be placed on each of the first elevating platform (26L) and the second elevating platform (26R).

7. The automated storage/retrieval system according to any one of claims 1 to 6, wherein the conveying direction of the waiting conveyors (20) can be switched between forward and reverse directions.

8. The automated storage/retrieval system according to any one of claims 1 to 3, wherein the conveyor system (128) comprises:
a first storage conveyor (130L) transferring a unit load to the first elevating platform (26L);
a first retrieval conveyor (132L) disposed at the same height level as that of the first storage conveyor (130L), onto the first retrieval conveyor (132L) a unit load is transferred from the first elevating platform (26L);
a second storage conveyor (130R) transferring a unit load to the second elevating platform (26R); and
a second retrieval conveyor (132R) disposed at the same height level as that of the second storage conveyor (130R) and onto the second retrieval conveyor (132R) a unit load is transferred from the second elevating platform

## Patentansprüche

1. Automatisches Ein-/Auslagerungssystem (10, 100) umfassend:
ein erstes Mehrebenenregal (12L) und ein zweites Mehrebenenregal (12R), die mehrere Regalfböden (14) aufweisen und in einem parallelen Muster einander gegenüberliegend angeordnet sind,
eine erste Ein-/Auslagerungsstation (18L) und eine zweite Ein-/Auslagerungsstation (18R), die jeweils angrenzend an einem Ende jedes ersten Mehrebenenregals (12L) und zweiten Mehrebenenregals (12R) angeordnet sind und dieselbe Anzahl an wartenden Förderern (20) aufweisen wie die Anzahl der Regalböden (14),
ein Transfershuttle (16), das angeordnet ist, um auf jeder Ebene oder jedem Satz von Ebenen der Regalböden (14) horizontal zu verfahren, und wartende Förderer (20) zwischen dem ersten Mehrebenenregal (12L) und dem zweiten Mehrebenenregal (12R) sowie zwischen der ersten Ein-/Auslagerungsstation (18L) und der Ein-/Auslagerungsstation (18R), wobei das Transfershuttle (16) an die Regalfächer (14) und die wartenden Förderer (20) eine Ladungseinheit liefert und hiervon eine Ladungseinheit aufnimmt,
eine Hubvorrichtung (22), die an der gegenüberliegenden Seite des ersten Mehrebenenregals (12L) und des zweiten Mehrebenenregals (12R) und angrenzend an der ersten Ein-/Auslagerungsstation (18L) und der zweiten Ein-/Auslagerungsstation (18R) angeordnet ist, wobei die Hubvorrichtung (22) eine erste Hubplattform (26L) und eine zweite Hubplattform (26R) aufweist, die in jeder der ersten Ein-/Auslagerungsstation (18L) und der zweiten Ein-/Auslagerungsstation (18R) an die wartenden Förderer (20) eine Ladungseinheit liefert und hiervon eine Ladungseinheit aufnimmt, und
ein Fördersystem (28, 128), das an die erste Hubplattform (26L) und die zweite Hubplattform (26R) eine Ladungseinheit liefert und hiervon aufnimmt,
wobei die Förderrichtung der wartenden Förderer (20) in der ersten Ein-/Auslagerungsstation (18L) und die Förderrichtung der wartenden Förderer (20) in der zweiten Ein-/Auslagerungsstation (18R) auf derselben Höhe zueinander entgegengesetzt sind, und
wobei die Förderrichtung eines Teils der wartenden Förderer (20) in der ersten Ein-/Auslagerungsstation (18L) entgegengesetzt ist zu der Förderrichtung der übrigen wartenden Förderer (20) in der ersten Ein-/Auslagerungsstation (18L), **dadurch gekennzeichnet, dass** jeweils ein zusätzliches Mehrebenenregal (112) und eine zusätzliche Ein-/Auslagerungsstation (118) an der gegenüberliegenden Seite der Hubvorrichtung (22) des ersten Mehrebenenregals (12L) und der ersten Ein-/Auslagerungsstation (18L) und an der gegenüberliegenden Seite der Hubvorrichtung (22) des zweiten Mehrebenenregals (12R) und der zweiten Ein-/Auslagerungsstation (18R) angeordnet sind.

2. Automatisches Ein-/Auslagerungssystem nach Anspruch 1, wobei die Förderrichtung der wartenden Förderer (20) in der ersten Ein-/Auslagerungsstation (18L) von Ebene zu Ebene abwechselnd entgegengesetzt sind.

3. Automatisches Ein-/Auslagerungssystem nach Anspruch 1, wobei die Förderrichtungen der wartenden Förderer (20) in der ersten Ein-/Auslagerungsstation (18L) mit jedem Satz mehrerer Ebenen abwechselnd entgegengesetzt sind.

4. Automatisches Ein-/Auslagerungssystem nach einem der Ansprüche 1 bis 3, wobei das Fördersystem (28) umfasst:
einen ersten Einlagerungsförderer (30L), der eine Ladungseinheit zu der ersten Hubplattform (26L) befördert,
einen ersten Entnahmeförderer (32L), der oberhalb oder unterhalb des ersten Einlagerungsförderers (30L) angeordnet ist, wobei eine Ladungseinheit von der ersten Hubplattform (26L) auf den ersten Entnahmeförderer (32L) befördert wird,
einen zweiten Einlagerungsförderer (30R), der eine Ladungseinheit zu der zweiten Hubplattform (26R) befördert, und
einen zweiten Entnahmeförderer (32R), der oberhalb oder unterhalb des zweiten Einlagerungsförderers (30R) angeordnet ist, wobei eine Ladungseinheit von der zweiten Hubplattform (26R) auf den zweiten Entnahmeförderer (32R) befördert wird.

5. Automatisches Ein-/Auslagerungssystem nach einem der Ansprüche 1 bis 4, wobei die erste Hubplattform (26L) und die zweite Hubplattform (26R) zwei obere und untere Ebenen aufweisen.

6. Automatisches Ein-/Auslagerungssystem nach einem der Ansprüche 1 bis 5, wobei zwei oder mehr Ladungseinheiten auf jeder der ersten Hubplattform (26L) und der zweiten Hubplattform (26R) platziert werden können.

7. Automatisches Ein-/Auslagerungssystem nach einem der Ansprüche 1 bis 6, wobei die Förderrichtung der wartenden Förderer (20) zwischen Vorwärts- und Rückwärtsrichtungen umgeschaltet werden kann.

8. Automatisches Ein-/Auslagerungssystem nach einem der Ansprüche 1 bis 3, wobei das Fördersystem (128) umfasst:
einen ersten Einlagerungsförderer (130L), der eine Ladungseinheit zu der ersten Hubplattform (26L) befördert,
einen ersten Entnahmeförderer (132L), der auf derselben Höhe angeordnet ist wie der erste Einlagerungsförderer (130L), wobei eine Ladungseinheit von der ersten Hubplattform (26L) auf den ersten Entnahmeförderer (132L) befördert wird,
einen zweiten Einlagerungsförderer (130R), der eine Ladungseinheit zu der zweiten Hubplattform (26R) befördert, und
einen zweiten Entnahmeförderer (132R), der auf derselben Höhe angeordnet ist wie der zweite Einlagerungsförderer (130R) und wobei eine Ladungseinheit von der zweiten Hubplattform (26R) auf den zweiten Entnahmeförderer (132R) befördert wird.

## Revendications

1. Un système automatisé de stockage/extraction (10, 100) comprenant :
un premier rack à multi-niveaux (12L) et un second rack à multi-niveaux (12R) ayant plusieurs étagères (14) et disposés parallèlement et de manière opposés l'un à l'autre;
une première station de stockage/extraction (18L) et une seconde station de stockage/extraction (18R) disposées respectivement de manière adjacente à une extrémité de chaque premier rack à multi-niveaux (12L) et second rack à multi-niveaux (12R), et ayant le même nombre de convoyeurs d'attente (20) que le nombre d'étagères (14) ;
une navette de transport (16) prévue pour se déplacer horizontalement, entre le premier rack à multi-niveaux (12L) et le second rack à multi-niveaux (12R) à chaque niveau ou à chaque ensemble de niveaux d'étagères (14) et convoyeurs d'attente (20), ainsi qu'entre la première station de stockage/extraction (18L) et la seconde station de stockage/extraction (18R), la navette de transfert (16) délivrant et recevant une unité de chargement de l'étagère (14) et des convoyeurs d'attente (20) ;
un dispositif de d'élévation (22) prévu à l'opposé du premier support à multi-niveaux (12L) et du second support à multi-niveaux (12R) et de manière adjacente à la première station de stockage/extraction (18L) et à la seconde station de stockage/extraction (18R), le dispositif d'élévation (22) ayant une première plateforme d'élévation (26L) et une seconde plateforme d'élévation (26R) délivrant et recevant une unité de chargement des convoyeurs d'attente (20) dans chaque première station de stockage/extraction (18L) et seconde station stockage/extraction (18R) ; et
un système de transport (28, 128) délivrant une unité de chargement à et recevant une unité de chargement de la première plateforme d'élévation (26L) et de la seconde plateforme d'élévation (26R) ;
dans lequel la direction de convoyage des convoyeurs d'attente (20) dans la première station de stockage/extraction (18L) et la direction de convoyage des convoyeurs d'attente (20) dans la seconde station de stockage/extraction (18R) sont opposées l'une à l'autre aux mêmes hauteurs; et
dans lequel la direction de convoyage d'une partie des convoyeurs d'attente (20) dans la première station de stockage/extraction (18L) est opposée à la direction de convoyage des convoyeurs d'attente (20) restants dans la première station de stockage/extraction (18L) **caractérisé en ce qu'**un support à multi-niveaux supplémentaire (112) et une station de stockage/extraction supplémentaire (118) sont disposés respectivement dans le sens opposé du dispositif d'élévation (22) à partir du premier support à multi-niveaux (12L) et de la première station de stockage/extraction (18L) et dans le sens opposé du dispositif d'élévation (22) du second support à multi-niveaux (12R) et de la seconde station de stockage/extraction (18R).

2. Système automatisé de stockage/extraction selon la revendication 1, dans lequel la direction de convoyage des convoyeurs d'attente (20) dans la première station de stockage/extraction (18L) est alternativement opposée pour chaque niveau.

3. Système automatisé de stockage/extraction selon la revendication 1, dans lequel la direction de convoyage des convoyeurs d'attente (20) dans la première station de stockage/extraction (18L) est alternativement opposée pour chaque ensemble de niveaux.

4. Système automatisé de stockage/extraction selon l'une quelconque des revendications 1 à 3, dans lequel le système de transport (28) comprend :
un premier convoyeur de stockage (30L) pour transférer une unité de chargement à la première plateforme d'élévation (26L) ;
un convoyeur d'extraction (32L) disposé dessus ou dessous le premier convoyeur de stockage (30L), sur le premier convoyeur d'extraction (32L) une unité de chargement est transférée de la plateforme d'élévation (26L) ;
un second convoyeur de stockage (30R) pour transférer une unité de chargement à la deuxième plateforme d'élévation (26R) ; et
un deuxième convoyeur d'extraction (32R) disposé dessus ou dessous le deuxième convoyeur de stockage (30R), sur le second convoyeur d'extraction (32R) une unité de chargement est transférée de la deuxième plateforme d'élévation (26R).

5. Système automatisé de stockage/extraction selon l'une quelconque des revendications 1 à 4, dans lequel la première plateforme (26L) et la seconde plateforme d'élévation (26R) ont deux niveaux supérieurs et inférieurs.

6. Système automatisé de stockage/extraction selon l'une quelconque des revendications 1 à 5, dans lequel deux unités ou plus de chargement peuvent être placées sur chaque première plateforme d'élévation (26L) et deuxième plateforme d'élévation (26R).

7. Système automatisé de stockage/extraction selon l'une quelconque des revendications 1 à 6, dans lequel la direction de convoyage des convoyeurs d'attente (20) peut être commutée entre marche avant et marche arrière.

8. Système automatisé de stockage/extraction selon l'une quelconque des revendications 1 à 3, dans lequel le système de transport (128) comprend :
un premier convoyeur de stockage (130L) pour transférer une unité de chargement à la première plateforme d'élévation (26L) ;
un premier convoyeur d'extraction (132L) disposé à la même hauteur que celui du premier convoyeur de stockage (130L), sur le premier convoyeur de d'extraction (132L) une unité de chargement est transférée de la première plateforme d'élévation (26L) ;
un second convoyeur de stockage (130R) pour transférer une unité de chargement à la deuxième plateforme d'élévation (26R) ; et
un deuxième convoyeur d'extraction (132R) disposé à la même hauteur que le deuxième convoyeur de stockage (130R) et sur le deuxième convoyeur d'extraction (132R) une unité de chargement est transférée de la deuxième plateforme d'élévation (26R).
